(19) Europäisches Patentamt
European Patent Office
Office européen des brevets

(11) EP 4 551 021 B1

(12) EUROPEAN PATENT SPECIFICATION

(45) Date of publication and mention of the grant of the patent:
**24.06.2026 Bulletin 2026/26**

(21) Application number: **23738473.0**

(22) Date of filing: **03.07.2023**

(51) International Patent Classification (IPC):
***A01N 43/40** (2006.01)* ***A01N 65/38** (2009.01)*
***A01P 17/00** (2006.01)*

(52) Cooperative Patent Classification (CPC):
**A01N 43/40; A01N 65/38; A01P 17/00**

(86) International application number:
**PCT/EP2023/068167**

(87) International publication number:
**WO 2024/008617 (11.01.2024 Gazette 2024/02)**

# (54) TOBACCO ALKALOID INSECT REPELLENTS IN PLANTS

TABAKALKALOID-INSEKTENABWEHRMITTEL IN PFLANZEN

RÉPULSIFS D’INSECTES D’ALCALOÏDE DE TABAC DANS DES PLANTES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.07.2022 EP 22182915**

(43) Date of publication of application:
**14.05.2025 Bulletin 2025/20**

(73) Proprietor: **Philip Morris Products S.A.**
**2000 Neuchâtel (CH)**

(72) Inventors:
- **AMOEDO BRAGA, Joao Pedro**
  **1007 Lausanne (CH)**
- **HOENG, Julia**
  **2000 Neuchâtel (CH)**
- **IVANOV, Nikolai**
  **2000 Neuchâtel (CH)**
- **KAMINSKI, Kacper Piotr**
  **2000 Neuchâtel (CH)**
- **SCHORDERET WEBER, Sandra**
  **2000 Neuchâtel (CH)**

(74) Representative: **Reddie & Grose LLP**
**The White Chapel Building**
**10 Whitechapel High Street**
**London E1 8QS (GB)**

(56) References cited:
**WO-A1-2020/260392**

- **WAGAN TUFAIL AHMED ET AL: "Repellency, toxicity, and anti-oviposition of essential oil of Gardenia jasminoides and its four major chemical components against whiteflies and mites", SCIENTIFIC REPORTS, vol. 8, no. 1, 20 June 2018 (2018-06-20), XP093106046, Retrieved from the Internet <URL:https://www.nature.com/articles/s41598-018-27366-5> DOI: 10.1038/s41598-018-27366-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The present disclosure relates in its broadest aspect to the use of a formulation comprising a compound of Formula I for repelling hemipteran insects. Also provided herein is a method for repelling hemipteran insects.

Agriculture is a key activity for humans, providing for basic needs such as food, clothing and shelter. Agricultural productivity may be negatively affected by a number of factors including insect infestations. Insect infestations interfere with the growth of crops and plants and cause damage to cultivated and naturally growing plants. The interference and damage may result in crops failing and plants being unable to reach maturity. It is estimated that insect infestations destroy at least 30 to 40 percent (%) of global agricultural production representing a particular threat to parts of the global economy dependent in agriculture.

Insects are responsible for two major kinds of damage to growing crops. Firstly, feeding insects cause direct damage to the plant by eating leaves or burrowing into the stem, fruit, or roots of the plant. Secondly, there may be indirect damage when the insect itself does little or no harm to the plant but transmits a bacterial, viral, or fungal infection to the crop.

Whitefly are from the Hemiptera order of insects belonging to the Aleyrodidae family. They are considered a major pest for many crops because they cause considerable damage and loss of yield. They feed by sucking the sap from the host plant. They are polyphagous, meaning that they feed on many different plants making them a hazard for the majority of crops.

The two common species of whitefly are tobacco whitefly (*Bemisia tabaci)* and glasshouse whitefly (*Trialeurodes vaporariorum*). *Bemisia tabaci* is currently recognized as a complex of around 40 cryptic species with worldwide distribution that can feed on over 900 plant species including a wide range of vegetables (tomatoes, eggplants, sweet potato, squash, broccoli, cabbage, etc), but also cotton, tobacco and ornamentals such as poinsettia, garden roses, lantana or lilies.

The full life cycle of the whitefly lasts between 15 to 40 days, depending on the host plant and environmental conditions. For example, the number of deposited eggs and survival of the immature stages and adults are greatly affected by temperature with an optimal reproductive fitness being around 28 - 30 Celsius degrees (°C) (Curnutte et al., Annals of the Entomological Society of America, Vol. 107, No.5).

Whiteflies lay their eggs on the upper and lower side of the leaves. From the hatched egg, the first nymphal instar (crowler) emerges and moves along the leaf until it finds a suitable place to begin feeding on the phloem sap, which is rich in sugars. The nymphs will moult into second, third and fourth nymphal instars during which they remain in the same place and continue to feed off the plant. The fourth instar stage is also called the pupal stage or red-nymph stage from which the adult will emerge (Sani et al., Insects, 2020, 11, 619).

The direct damage is caused to the plant as the whitefly feed. The sucking of the sap leaves discoloured patches on the leaf. Furthermore, as they suck out the sap, they release toxic substances into the phloem, which then spread throughout the plant. This leads to metabolic imbalances which causes an overall weakening of the plant, chlorosis, and changes to the flowers and fruits.

In terms of indirect damage, the honeydew excreted by the nymphs enables fungi such as sooty mould to form on the leaves. This mould acts as a screen and reduces the photosynthetic capacity of the plant.

Finally, the most serious damage that the whitefly can cause to crops is the transmission of viruses. The *B. tabaci* complex is known to transmit more than 200 plant viruses. These include the TYLCV (Tomato yellow leaf curl virus), the TYMV (Tomato Yellow Mosaic Virus), or viruses of the cotton leaf curl disease complex.

One of the main objectives when controlling whitefly is to avoid the crop being infected by a virus. The use of protective barriers such as nets and covers represent a good option for preventing infestations but they are only suitable for smaller, less mature crops.

The use of control agents represents the most effective way for preventing infestation throughout the lifetime of a crop.

Most of the pest control agents are synthetic pesticides. Due to long term usage of such agents, many pests have developed resistance. Resistance is defined as a change in the sensitivity of a pest population to a pesticide, resulting in the failure of a correct application of the pesticide. The intensive use of insecticides over the last decades to control whitefly led to the emergence of populations resistant towards various classes of insecticides such as carbamates, organophosphates, and pyrethroids.

Beside the difficulty of controlling these pests with the current pest control agents, there is increasing evidence that some of the pest control agents are highly toxic and take many years to biodegrade. It is therefore desirable to develop a novel, natural, pest control agent with a mode of action different from those already known. In addition, natural pest control agents present low impact on the environment and are generally safer and less hazardous for the people using them.

Among natural pest control agents, tobacco (*Nicotiana genus spp*.) plants have been used for centuries in the form of dry leaves, powder, extracts or fumigants. However, interest for tobacco has dropped because of safety concerns regarding tobacco's major alkaloid, nicotine, and the discovery of more specific and potent synthetic pesticides. Therefore,

no tobacco-derivatives or nicotine-based products are currently commercially available. WO 2020/260392 describes a formulation comprising an extract of a tobacco plant and/or a formulation comprising a compound of Formula I, in particular anatabine, and corresponding uses thereof for the reduction of infestation with ectoparasites. The paper "Repellency, toxicity, and anti-oviposition of essential oil of Gardenia jasminoides and its four major chemical components against whiteflies and mites" by Wagen, Cai, and Hua in Scientific Reports, 2018, 8, 9375 describes the repellent, insecticidal, and anti-oviposition activities of the ethanol-extracted essential oil of *Gardenia jasminoides* against *Bemisia tabaci* and *Tetranychus urticae* adult and nymph stages under laboratory and greenhouse conditions.

Accordingly, there is a clear need to identify more plant derived compounds that are as effective as synthetic pesticides, but more environmentally friendly, safer and with a novel mode of action to be included in agricultural crop pest management programs. It is desirable to provide new compounds and formulations that will act in a different way than killing insects and which are, in particular, active as a repellent.

The present invention relates to the use of a formulation for repelling or reducing infestation of hemipteran insects, wherein the hemipteran insects are sap-feeding insects. The formulation comprises a compound of Formula I. The compound of Formula I is

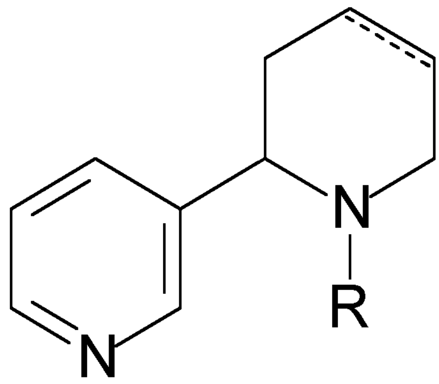

Formula I

wherein

R represents hydrogen or $C_1$-$C_5$ alkyl, and
------ represents a single or double bond.

According to an aspect of the present invention, there is provided the use of a formulation for repelling hemipteran insects. According to another aspect of the present invention, there is provided the use of a formulation for reducing infestation of hemipteran insects. The formulation comprises a compound of Formula I. The compound of Formula I is

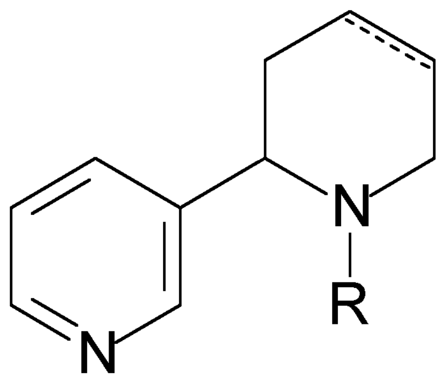

Formula I

wherein

R represents hydrogen or $C_1$-$C_5$ alkyl, and
------ represents a single or double bond.

As used herein, the terms "repelling"; "repelling effect" or "repellent effect" means the effect by which insects are

forced away from and/or prevented from landing, walking, feeding or laying eggs on a surface or substance.

As used herein, the term "infestation" means the state in which an abnormally high number of insects or other species are present on a surface or substance.

As used herein, the term "insects" means any member of the largest class of the phylum Arthropoda.

As used herein "hemipteran insect" means insects that belong to the taxonomic rank commonly called true bugs, which share a common arrangement of sucking mouthparts. Accordingly, the term "hemipteran insects" as used herein is intended to define insects that feed on plants, using their sucking and piercing mouthparts to extract sap from a plant.

The present invention is further described with reference to the figures in which:

Figure 1 shows the repelling effect of anatabine and DEET over a period of 0, 1, 3 and 6 hours.
Figure 2 shows the repelling effect of anatabine at three different concentrations over a period of 3 and 6 hours.
Figure 3 shows the repelling effect of anatabine, DEET and methyl benzoate over a period of 0, 6, 24 and 48 hours.
Figure 4 shows the mortality of whitefly following the treatment of leaves with anatabine, DEET and methyl benzoate compared to whitefly provided with leaves treated with a placebo solution, or no leaves, over a period of 0, 6, 24 and 48 hours.
Figure 5 shows the repelling effect of anatabine and DEET over a period of 51, 75 and 123 hours.

As described above, the present invention relates to the use of a formulation for repelling or reducing infestation of hemipteran insects.

The use of a formulation comprising a compound of Formula I has shown an improved repelling effect towards hemipteran insects, especially whitefly.

In particular, the use of a formulation comprising anatabine has shown an improved repelling effect towards hemipteran insects, especially whitefly.

The repelling effect of the formulation according to the invention has been shown to be more potent than, and last longer than, commonly used chemical agents such as DEET (N,N-Diethyl-meta-toluamide). This has the advantage of reducing the amount of, and frequency with which, the formulation must be applied to crops or plants. In addition, the repelling effect was found to be more effective than that of methyl benzoate, a natural, plant derived, compound known in the art to be efficacious against whitefly (Mostafiz et al., PLoS ONE 13, 2018). Surprisingly, it has been found that the repelling effect of the formulation according to the invention can be maintained at 100 percent over a prolonged period of time without causing damage to crops or plants. The absence of damage to crops or plants is evidence that the efficacy of the formulation according to the invention is directly attributable to hemipteran insects being repelled from their source of food as opposed to having their source of food destroyed. This repelling effect has the additional advantage of preventing eggs being deposited on the leaves. The combined effect of preventing access to food and oviposition results in a total repellent effect. This total repellent effect, which was shown to last for a surprisingly prolonged period of time, ultimately results in the disruption of the life cycle of the whitefly and consequently decreases the whitefly population in the area where the formulation is applied.

It is known that some tobacco plant compounds such as nicotine can provide a defensive barrier towards insect infestation. Nicotine is one of the most abundant compounds in a tobacco plant and it is reported to be highly toxic for the vast majority of plant feeding insects. However, whitefly show a significant tolerance towards this and other tobacco plant compounds to the extent that they feed on tobacco plants and can consume 40-fold higher levels of these compounds compared to other insects. Despite tobacco plants being a common food source for hemipteran insects it has been surprisingly found that natural compounds from tobacco plants, in particular anatabine, provide a repelling effect against hemipteran insects, in particular whitefly. Advantageously, the use of anatabine and formulations comprising anatabine provides a natural repellent which is highly effective and efficient, while also being more environmentally friendly and safer to use.

In an aspect of the present invention, there is provided the use of a formulation according to the present invention, wherein the hemipteran insects are sap-feeding insects. Sap-feeding insects feed upon the foliage of trees by ingesting the fluid parts. Sap-feeding insects have haustellate or sucking mouthparts, which form a beak used to pierce the tissue and suck from the phloem tissue buried inside the leaf. Nutritionally rich, phloem tissue represents a unique source of nourishment for sap-feeding insects that have evolved mechanisms to gain access to it. The use of a formulation according to the present invention prevents the hemipteran insects from accessing this source of nourishment. Advantageously, this protects the nourishment source from damage by the sap-feeding insects and forces the sap-feeding insects to seek food elsewhere.

In a further embodiment there is provided the use according to the present invention, wherein the hemipteran insect may be whitefly.

In other embodiments of the present invention, the hemipteran insects may be selected from the Aleyrodidae family consisting of Aleyrodes proletella, Aleurocanthus spiniferus, Aleurolobus barodensis, Aleurothrixus floccosus, Bemisia tabaci, Bemisia argentifolii, Dialeurodes citri, Parabemisia myricae, Trialeurodes vaporarium, or Siphoninus

phillyreae.

In other embodiments of the present invention, the hemipteran insects may be selected from the Aphididae family consisting of Aphis spp., Acyrthosiphon spp, Anuraphis cardui, Aulacorthum solani, Brachycaudus helichrysi, Brevicoryne brassicae, Ceratovacuna lanigera, Chaetosiphon fragaefolii, Chromaphis juglandicola, Cryptomyzus ribis, Dysaphis spp, Myzus spp., Eriosoma spp., Hyalopterus arundinis, Lipaphis erysimi, Macrosiphum spp., Melanaphis sacchari, Metopolophium dirhodum, Monellia costalis, Monelliopsis pecanis, Nasonovia ribisnigri, Pemphigus spp., Phloeomyzus passerinii, Phorodon humuli, Rhopalosiphum spp., Schizaphis graminum, Tinocallis caryaefoliae, Toxoptera spp., Acizzia spp., Acrida turrita, Acrogonia spp., Aeneolamia spp., Agonoscena spp. Allocaridara malayensis, Amrasca spp., Aonidiella spp., Aphanostigma piri, Arboridia apicalis, Arytainilla spp., Aspidiella spp., Aspidiotus spp., Atanus spp., Balclutha spp., Blastopsylla occidentalis, Boreioglycaspis melaleucae, Cacopsylla spp., Calligypona marginata, Carneocephala fulgida, Cercopidae, Ceroplastes spp., Chionaspis tegalensis, Chlorita onukii, Chrysomphalus ficus, Cicadulina mbila, Coccomytilus halli, Coccus spp., Comstockaspis perniciosa, Cryptoneossa spp., Ctenarytaina spp., Dalbulus spp., Diaphorina citri, Diaspis spp., Drosicha spp., Dysmicoccus spp., Empoasca spp., Epiacanthus stramineus, Erythroneura spp., Eucalyptolyma spp., Euphyllura spp., Euscelis bilobatus, Ferrisia spp., Fiorinia theae, Geococcus coffeae, Glycaspis spp., Heteropsylla cubana, Heteropsylla spinulosa, Homalodisca coagulata, Icerya spp., Idiocerus spp., Idioscopus spp., Laodelphax striatellus, Lecanium spp., Lepidosaphes spp., Macrosteles facifrons, Mahanarva spp., Metcalfiella spp., Nephotettix spp., Nilaparvata lugens, Oncometopia spp., Orthezia praelonga, Pachypsylla spp., Paratrioza spp., Parlatoria spp., Peregrinus maidis, Phenacoccus spp., Phylloxera spp., Pinnaspis aspidistrae, Planococcus spp., Prosopidopsylla flava, Protopulvinaria pyriformis, Pseudaonidia paeoniae, Pseudaulacaspis ssp., Pseudococcus spp., Psyllopsis spp., Psylla spp., Pyrilla spp., Quadraspidiotus spp., Quesada gigas, Rastrococcus spp., Saissetia spp., Scaphoideus titanus, Selenaspidus articulatus, Sogata spp., Sogatella furcifera, Sogatodes spp., Stictocephala festina, Tenalaphara malayensis, Tetragonocephela spp., Tomaspis spp., Trioza spp., Typhlocyba spp., Unaspis spp., Viteus vitifoliae, or Zygina spp..

In certain other embodiments of the present invention, the hemipteran insects may be selected from the group consisting of Heteroptera insects, such as but not exclusively Anasa tristis, Boisea spp., Blissus spp., Cavelerius spp., Cletus punctiger, Dasynus piperis, Diconocoris hewetti, Dysdercus spp, Eurygaster spp., Leptocorisa spp., Leptoglossus phyllopus, Macropes excavatus, Miridae, Pentastomidae, Piesma spp., Pseudacysta persea, Riptortus spp., Rhopalus spp., Scaptocoris castanea, Scotinophora spp., Stephanitis spp., or Togo hemipterus.

In some embodiments, there is provided the use according to the present invention, wherein the use may be for repelling or reducing infestation of hemipteran insects from agricultural crops or plants.

In some further embodiments, there is provided the use according to the present invention, wherein the agricultural crops or plants may be vulnerable to whitefly infestation and wherein the agricultural crops or plants may be tobacco plants, cereals, leguminous plants, oil plants, Cucurbitaceae plants, fibre plants, vegetables, fruits or flowers.

In certain other embodiments of the present invention, the agricultural crops or plants may be selected from the group consisting of wheat, barley, rye, oats, maize, rice, sorghum, triticale, pomes, stone fruit, soft fruit, apples, grapes, pears, plums, peaches, almonds, pistachio, cherries, berries, strawberries, raspberries, blackberries, bell pepper, red pepper, leguminous plants, beans, lentils, peas, soybeans, oil plants, rape, mustard, sunflowers, marrows, cucumbers, melons, squashes, pumpkins, cotton, flax, hemp, jute, citrus, calamondin, citrus citron, citrus hybrids, chironja, tangelo, tangor, grapefruit, kumquat, lemon, lime, mandarin, sour orange, sweet orange, pummelo, satsuma mandarin, spinach, lettuce, asparagus, cabbages, carrots, onions, tomatoes, potatoes, paprika, broccoli, cauliflower, sweet potatoes, coffee, flowers, poinsettia, garden rose, lantana, lilies, shrubs, broad-leaved trees, evergreens, conifers, or crepe myrtle.

In some embodiments of the present invention, the agricultural crops or plants may be found in every stage of their life cycle.

In further embodiments, there is provided the use according to the present invention, wherein the agricultural crops or plants may be cultivated in a greenhouse. The warm, humid conditions and abundant food in a greenhouse provide an excellent, stable environment for insect development. While hemipteran insects, in particular whitefly, flourish in temperate zones, it is known they can easily develop in greenhouses located in climate zones where the conditions would not normally sustain their life cycle. Advantageously, it has been found that the formulation according to the present invention may be used in greenhouses. In fact, while synthetic pesticides used in enclosed spaces have serious harmful consequences for workers during and after application, the use of the formulation according to the present invention provides a natural alternative, which is safer for the user and more sustainable for the environment.

As detailed above, there is provided the use of a formulation for repelling or reducing infestation of hemipteran insects, wherein the formulation comprises a compound of Formula I

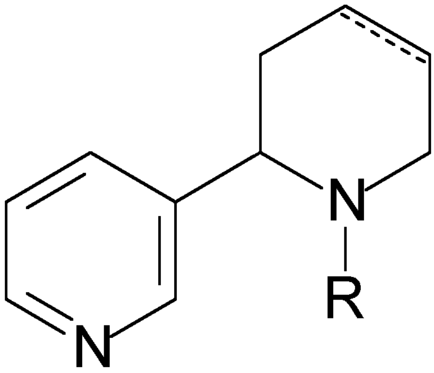

Formula I

Wherein

R represents hydrogen or $C_1$-$C_5$ alkyl, and
------ represents a single or double bond, and
wherein the hemipteran insects are sap-feeding insects.

In some embodiments of the present invention, in the compound of Formula I, R may represent hydrogen.

In some other embodiments of the present invention, in the compound of Formula I,may represent a double bond.

In certain embodiments of the present invention, the compound of Formula I may be anatabine.

Anatabine can occur in two enantiomeric forms: S-(-) anatabine and R-(+) anatabine. Accordingly, anatabine may be present in the formulation of the present invention as any one of S-(-) anatabine, R-(+) anatabine, a mixture of S-(-) anatabine and R-(+) anatabine, or a racemate of S-(-) anatabine and R-(+) anatabine. The amount of R-(+) anatabine and S-(-) anatabine may be present in any enantiomeric ratio, meaning in any enantiomeric excess (ee) of (R)-(+) anatabine or S-(-) anatabine.

As used herein, the term "enantiomeric ratio" of R-(+) anatabine and S-(-) anatabine is intended to mean the weight ratio of R-(+) anatabine to S-(-) anatabine.

According to the use of the present invention, the formulation may comprise an enantiomeric ratio of R-(+) anatabine to S-(-) anatabine of 10:90, 20:80, 30:70, 40:60, 60:40, 70:30, 80:20, or 90:10.

The enantiomeric ratio of R-(+) anatabine and S-(-) anatabine may be calculated using the formula as follows:

*Ratio of R-(+) anatabine and S-(-) anatabine = amount of R-(+) anatabine by weight / amount of S-(-) anatabine by weight*

If solvates of R-(+) anatabine and/or S-(-) anatabine are used, the solvent may be disregarded in the calculation of the ratio.

The enantiomeric ratio may be determined in a number of ways, including but not limited to chromatography, polarimetric measurement of the rotation of polarized light, nuclear magnetic resonance spectroscopy, derivatization of a compound using a chiral compound such as Mosher's acid followed by chromatography or nuclear magnetic resonance spectroscopy, highpressure liquid chromatography (HPLC) or direct fractional crystallization of the racemate.

According to some embodiments of the present invention, the compounds of Formula I may be extracted from tobacco or may be chemically synthesized. The compounds of Formula I may be extracted from any variety of tobacco plant. As used herein, the term "extract" or "extracted" is intended to mean a substance obtained from, or a process for obtaining a substance from, a natural source. Alternatively, the compounds of Formula I may be chemically synthesized such that the compounds are identical to the naturally occurring compounds.

In some embodiments, there is provided the use according to the present invention, wherein the formulation may comprise a concentrate of the compound of Formula I.

According to the use of the present invention, the formulation may comprise the compound of Formula I in an amount of at least 99 percent, at least 95 percent, at least 90 percent, at least 85 percent, at least 80 percent, at least 75 percent, at least 70 percent, at least 65 percent, at least 60 percent, at least 55 percent, at least 50 percent, at least 45 percent, at least 40 percent, at least 35 percent, at least 30 percent, at least 25 percent, at least 20 percent, at least 15 percent, at least 10 percent, at least 5 percent, at least 2.5 percent, at least 2.4 percent, at least 2.3 percent, at least 2.2 percent, at least 2.1 percent, at least 2 percent, at least 1.9 percent, at least 1.8 percent, at least 1.7 percent, at least 1.6 percent, at least 1.5 percent, at least 1.4 percent, at least 1.3 percent, at least 1.2 percent, at least 1.1 percent, at least 1 percent, at least 0.9 percent, at least 0.8 percent, at least 0.7 percent, at least 0.6 percent, at least 0.5 percent, at least 0.4

percent, at least 0.3 percent, at least 0.2 percent, or at least 0.1 percent by weight of the formulation.

According to the use of the present invention, the formulation may comprise the compound of Formula I in an amount of no more than 99 percent, no more than 95 percent, no more than 90 percent, no more than 85 percent, no more than 80 percent, no more than 75 percent, no more than 70 percent, no more than 65 percent, no more than 60 percent, no more than 55 percent, no more than 50 percent, no more than 45 percent, no more than 40 percent, no more than 35 percent, no more than 30 percent, no more than 25 percent, no more than 20 percent, no more than 15 percent, no more than 10 percent, no more than 5 percent, no more than 2.5 percent, no more than 2.4 percent, no more than 2.3 percent, no more than 2.2 percent, no more than 2.1 percent, no more than 2 percent, no more than 1.9 percent, no more than 1.8 percent, no more than 1.7 percent, no more than 1.6 percent, no more than 1.5 percent, no more than 1.4 percent, no more than 1.3 percent, no more than 1.2 percent, no more than 1.1 percent, no more than 1 percent, no more than 0.9 percent, no more than 0.8 percent, no more than 0.7 percent, no more than 0.6 percent, no more than 0.5 percent, no more than 0.4 percent, no more than 0.3 percent, no more than 0.2 percent, or no more than 0.1 percent by weight of the formulation.

According to the use of the present invention, the formulation may comprise the compound of Formula I in an amount of about 99 percent, about 95 percent, about 90 percent, about 85 percent, about 80 percent, about 75 percent, about 70 percent, about 65 percent, about 60 percent, about 55 percent, about 50 percent, about 45 percent, about 40 percent, about 35 percent, about 30 percent, about 25 percent, about 20 percent, about 15 percent, about 10 percent, about 5 percent, about 2.5 percent, about 2.4 percent, about 2.3 percent, about 2.2 percent, about 2.1 percent, about 2 percent, about 1.9 percent, about 1.8 percent, about 1.7 percent, about 1.6 percent, about 1.5 percent, about 1.4 percent, about 1.3 percent, about 1.2 percent, about 1.1 percent, about 1 percent, about 0.9 percent, about 0.8 percent, about 0.7 percent, about 0.6 percent, about 0.5 percent, about 0.4 percent, about 0.3 percent, about 0.2 percent, or about 0.1 percent by weight of the formulation.

According to the use of the present invention, the formulation may comprise the compound of Formula I in an amount selected from 1 percent to 99 percent, from 2.5 percent to 95 percent, from 5 percent to 90 percent, from 10 percent to 85 percent, 15 percent to 80 percent, from 20 percent to 75 percent, from 25 percent to 70 percent, from 30 percent to 65 percent, from 35 percent to 60 percent, from 40 percent to 55 percent, from 45 percent to 50 percent by weight of the formulation. The amount of compound of Formula I may have any range from the given endpoints.

According to a further use of the present invention, the formulation may comprise the compound of Formula I in an amount selected from 0.1 percent to 5 percent, from 0.15 percent to 4.9 percent, from 0.2 percent to 4.8 percent, from 0.25 percent to 4.7 percent, from 0.3 percent to 4.6 percent, from 0.35 percent to 4.5 percent, from 0.4 percent to 4.4 percent, from 0.45 percent to 4.3 percent, from 0.5 percent to 4.2 percent, from 0.55 percent to 4.1 percent, from 0.6 percent to 4.0 percent, from 0.65 percent to 3.9 percent, from 0.7 percent to 3.8 percent, from 0.75 percent to 3.7 percent, from 0.8 percent to 3.6 percent, from 0.85 percent to 3.5 percent, from 0.9 percent to 3.4 percent, from 0.95 percent to 3.3 percent, from 1 percent to 3.2 percent, from 1.15 percent to 3.1 percent, from 1.2 percent to 3.0 percent, from 1.25 percent to 2.9 percent, from 1.3 percent to 2.8 percent, from 1.35 percent to 2.7 percent, from 1.4 percent to 2.6 percent, from 1.45 percent to 2.5 percent, from 1.5 percent to 2.4 percent, from 1.6 percent to 2.3 percent, from 1.7 percent to 2.2 percent, from 1.8 percent to 2.1 percent by weight of the formulation. The amount of compound of Formula I may have any range from the given endpoints. According to some further embodiments of the present invention, the formulation may comprise the compound of Formula I in an amount of 5 percent, 2 percent, 1 percent or 0.5 percent by weight of the formulation.

In certain embodiments according to the present invention, the formulation may be a water-soluble concentrate, an emulsifiable concentrate, an emulsion, a microemulsion, an oil-based suspension concentrate, a flowable suspension, a water-dispersible granule, a water-soluble granule, a wettable powder, a water-soluble powder, a granule, an encapsulated granule, a fine granule, a macrogranule, an aqueous suspo-emulsion, a microencapsulated suspension or a microgranule. Advantageously, the formulation of the present invention may be provided in different forms depending on the type of interaction that is required between the formulation and the agricultural crops or plants. In fact, the provision of different forms of the formulation of the present invention enables selection of the most suitable formulation for the intended use to ensure optimum biological efficiency depending on the targeted agricultural crops or plants.

According to the present invention, there is provided the use of a formulation wherein the formulation may be diluted in water. The formulation of the present invention may be diluted in water to make a finished product. The formulation of the present invention may be provided as a pre-diluted, ready-to-use, formulation or it may be a concentrate intended for dilution prior to application. Advantageously, the pre-diluted, ready-to-use, formulation may be applied to plants or small agricultural crops. More advantageously, the formulation according to the present invention may be diluted right before application, allowing the user to adjust the dilution ratio of the formulation to be deployed on the agricultural crops or plants depending on the intended purpose of the application.

According to the present invention, there is provided the use of the formulation wherein the dilution ratio of the formulation to water may be selected from 1:1, 1:2, 1:3, 1:4, 1:5, 1:6, 1:7, 1:8, 1:9, 1:10, 1:15, 1:20, 1:25, 1:30, 1:35, 1:40, 1:45, 1:50, 1:55, 1:60, 1:65, 1:70, 1:75, 1:80, 1:85, 1:90, 1:95, 1:100, 1:150, 1:200, 1:250, 1:300, 1:350, 1:400, 1:450, 1:500, 1:600, 1:700, 1:800, 1:900, or 1:1000.

According to the present invention, there is provided the use of the diluted formulation wherein the diluted

formulation comprises the compound of Formula I in an amount from at least 0.1 percent, from at least 0.2 percent, from at least 0.3 percent, from at least 0.4 percent, from at least 0.5 percent, from at least 0.6 percent, from at least 0.7 percent, from at least 0.8 percent, from at least 0.9 percent, from at least 1 percent, from at least 1.1 percent, from at least 1.2 percent, from at least 1.3 percent, from at least 1.4 percent, from at least 1.5 percent, from at least 1.6 percent, from at least 1.7 percent, or from at least 1.8 percent by weight of the diluted formulation.

According to the present invention, there is provided the use of the diluted formulation wherein the diluted formulation comprises the compound of Formula I in an amount from no more than 20 percent, no more than 19 percent, no more than 18 percent, no more than 17 percent, no more than 16 percent, no more than 15 percent, no more than 14 percent, no more than 13 percent, no more than 12 percent, no more than 11 percent, no more than 10 percent, no more than 9 percent, no more than 8 percent, no more than 7 percent, no more than 6 percent, no more than 5 percent, no more than 4 percent, or no more than 3 percent by weight of the diluted formulation.

According to the present invention, there is provided the use of the diluted formulation wherein the diluted formulation comprises the compound of Formula I in an amount from about 0.1 percent to about 20 percent, from about 0.2 percent to about 19 percent, from about 0.3 percent to about 18 percent, from about 0.4 percent to about 17 percent, from about 0.5 percent to about 16 percent, from about 0.6 percent to about 15 percent, from about 0.7 percent to about 14 percent, from about 0.8 percent to about 13 percent, from about 0.9 percent to about 12 percent, from about 1 percent to about 11 percent, from about 1.1 percent to about 10 percent, from about 1.2 percent to about 9 percent, from about 1.3 percent to about 8 percent, from about 1.4 percent to about 7 percent, from about 1.5 percent to about 6 percent, from about 1.6 percent to about 5 percent, from about 1.7 percent to about 4 percent, or from about 1.8 percent to about 3 percent by weight of the diluted formulation.

In another embodiment of the present invention, there is provided the use of the diluted formulation wherein the diluted formulation comprises the compound of Formula I in an amount of less than about 10 percent by weight of the diluted formulation. In a further embodiment of the present invention, there is provided the use of the diluted formulation wherein the diluted formulation comprises the compound of Formula I in an amount of about 5 percent by weight of the diluted formulation. It has been surprisingly shown that at a concentration of less than 10 percent the formulation does not cause damage to crops or plants.

In further embodiments of the present invention, there is provided the use of a formulation wherein the formulation may be applied to agricultural crops or plants by coating, spraying, soaking, or irrigation. Advantageously, the choice of the method of application may be targeted to the different families of hemipteran insects. For example, a method with minimised air displacement that deposits closer to the leaves may be more suitable to flying insects, such as whitefly.

In some embodiments of the present invention, there is provided the use of a formulation, wherein the formulation may be applied to agricultural crops or plants 1, 2, 3, 4, 5 or 6 times within a 24 hours period.

According to the present invention, there is provided the use of a formulation, wherein the formulation may be applied to agricultural crops or plants with a frequency of every day, every second day, every fifth day, every week, every fortnight (14 days) or every month. Any frequency of application may be combined with any of the aforementioned number of times of application within a 24 hour period. According to the present invention, there is provided the use of a formulation, wherein the formulation may be applied on a routine basis, on a scheduled basis, or upon evaluation following each application.

According to the present invention, there is provided the use of a formulation, wherein the formulation may be applied at the earliest detection of insects or after manifestation of an infestation. Alternatively, the formulation according to the present invention may be used prophylactically before the presence of insects has been detected or prior to the manifestation of the infestation.

According to the present invention, there is provided the use of a formulation, wherein the formulation may be applied during the cooler periods of a day, such that it may be applied in the morning, in the evening or at night. Advantageously, it has been found that applying the formulation according to the present invention in the cooler periods of the day reduces the chances of evaporation of the formulation such that when the formulation is applied to agricultural crops or plants an effective concentration is maintained.

According to the present invention, there is provided the use of a formulation, wherein the formulation may be applied to agricultural crops or plants for at least 65 days, at least 60 days, at least 55 days, at least 50 days, at least 45 days, or at least 40 days, or at least 35 days, or at least 30 days, or at least 25 days, or at least 20 days.

According to the present invention, there is provided the use of a formulation, wherein the formulation may be applied to agricultural crops or plants for no more than 65 days, no more than 60 days, no more than 55 days, no more than 50 days, no more than 45 days, or no more than 40 days.

Advantageously, the formulation according to the present invention may be applied at a determined frequency for a period of time shorter, equal to or longer than the duration of the life cycle of the hemipteran insects. More advantageously, the formulation according to the present invention may be applied at a determined frequency for a period of time equal to the duration of the life cycle of the whitefly. Accordingly, the formulation according to the present invention may be applied for a period of at least 40 days.

According to another aspect of the present invention, there is provided a method of repelling hemipteran insects, the method comprising: preparing a concentrated formulation comprising a compound of Formula I, preferably anatabine; diluting the formulation in water to a predetermined dilution ratio or concentration; applying the diluted formulation to agricultural crops or plants, preferably by spraying.

The present invention is further described by, but not limited to, the following Examples:

Example 1: Comparative study of the repelling effect of anatabine and DEET.

The repelling effect of anatabine on adult whitefly was evaluated in a comparative study which compared the repelling effect of anatabine with the standard synthetic pesticide DEET and a placebo control in which the leaves were treated with solvent only.

For the purpose of the study, a tube test assay was performed using solutions of anatabine and DEET prepared according to Table 1.

Table 1: Solutions of anatabine and DEET.

| **Solutions** | Active ingredient | Concentration (percentage) | Solvent |
|---|---|---|---|
| Anatabine | Anatabine | 1.0 | Ethanol/water/Triton X-100 (70:30:0.01) |
| DEET | DEET | 1.0 | Ethanol/water/Triton X-100 (70:30:0.01) |
| Placebo | / | / | Ethanol/water/Triton X-100 (70:30:0.01) |

For the purpose of the study, leaf disks were dipped for a total time of 30 seconds into the prepared solutions and left to dry for 10 minutes at room temperature. Subsequently, the leaf disks were deposited at the bottom of glass tubes and a minimum of 20 adult whiteflies were introduced into the tubes. The repelling effect of both anatabine and DEET was measured at different time points: after 1, 3 and 6 hours. The repelling effect of both anatabine and DEET is shown in Table 2 and was calculated by counting the number of whitefly landing on a leaf compared to the placebo control, using the Abbott's formula:

*Repelling effect = 1 - (Number of whitefly on a leaf "placebo control" / Number of white flies on leaf "treated") * 100.*

The placebo control defines the baseline, against which the repelling effect is then calculated according to the formula above.

Table 2: Repelling effect of anatabine and DEET.

| | | Evaluation time | | | | | | | |
|---|---|---|---|---|---|---|---|---|---|
| | | **0 hour** | | **1 hour** | | **3 hour** | | **6 hour** | |
| **Active ingredient** | **Concentration (percentage)** | **Mean Repellence** | **Standard error** | **Mean Repellence** | **Standard error** | **Mean Repellence** | **Standard error** | **Mean Repellence** | **Standard** error |
| **Anatabine** | 1.0 | 81.3 | 18.8 | 90.0 | 8.7 | 96.0 | 6.9 | 88.9 | 0.0 |
| **DEET** | 1.0 | 87.5 | 21.7 | 90.0 | 8.7 | 68.0 | 6.9 | 51.9 | 6.4 |

The comparative study found that the repelling effect of anatabine was over 80 percent throughout the evaluation period of 6 hours, whereas the repelling effect of DEET dropped by almost 40 percent (to around 50 percent) after 6 hours (Figure 1).

Example 2: Study of the repelling effect of anatabine with respect to the concentration of anatabine.

The repelling effect of anatabine on adult whitefly was evaluated in a study aimed at optimizing the concentration of anatabine.

For the purpose of the study, a tube test assay was performed using solutions of anatabine at three different concentrations prepared according to Table 3.

The placebo control defines the baseline, against which the repelling effect is then calculated.

Table 3: Solutions of anatabine at three different concentrations.

| Solutions | Active ingredient | Concentration (percentage) | Solvent |
|---|---|---|---|
| 1 | Anatabine | 2 | Ethanol/water/Triton X-100 (70:30:0.01) |
| 2 | Anatabine | 5 | Ethanol/water/Triton X-100 (70:30:0.01) |
| 3 | Anatabine | 10 | Ethanol/water/Triton X-100 (70:30:0.01) |
| Placebo | / | / | Ethanol/water/Triton X-100 (70:30:0.01) |

For the purpose of the study, leaf disks were dipped for a total time of 30 seconds into the prepared solutions and left to dry for 10 minutes at room temperature. Subsequently, the leaf disks were deposited at the bottom of glass tubes and a minimum of 20 adult whiteflies were introduced into the tubes. The repelling effect of anatabine at three different concentrations was measured at different time points: after 1 hour, 3 hours, 6 hours. the repelling effect of anatabine at different concentrations is shown in Table 4.

Table 4: Repelling effect of anatabine at three different concentrations.

| | | Evaluation time | | | |
|---|---|---|---|---|---|
| | | 3 hour | | 6 hour | |
| **Active ingredient** | **Concentration (percentage)** | **Mean Repellence** | **Standard error** | **Mean Repellence** | **Standard error** |
| **Anatabine** | 2 | 100 | 0.0 | 100 | 0.0 |
| | 5 | 100 | 0.0 | 100 | 0.0 |
| | 10 | 100 | 0.0 | 100 | 0.0 |

The repelling effect of anatabine remained at 100 percent regardless of the concentration of anatabine (Figure 2) however, it was also observed that the leaves were not damaged by anatabine at concentrations of 5 percent or less.

Example 3: Comparative study of the repelling effect of anatabine, DEET and methyl benzoate.

The repelling effect of anatabine on adult whitefly was evaluated in a comparative study aimed at comparing the repelling effect of anatabine with DEET and methyl benzoate. DEET is a standard synthetic pesticide, while methyl benzoate is a plant derived organic compound that has been reported to have repellent and insecticidal properties, particularly against whitefly.

For the purpose of the study, a tube test assay was performed using solutions of anatabine, DEET and methyl benzoate prepared according to Table 5. A concentration of 5 percent was chosen based on the results of Example 2. The repelling effect of anatabine, DEET and methyl benzoate was evaluated with respect to a placebo control. In the placebo control the leaves were treated with solvent only. The placebo control defines the baseline, against which the repelling effect is then calculated.

Table 5: Solutions of anatabine and DEET.

| Solutions | Active ingredient | Concentration (percentage) | Solvent |
|---|---|---|---|
| Anatabine | Anatabine | 5 | Ethanol/water/Triton X-100 (70:30:0.01) |
| DEET | DEET | 5 | Ethanol/water/Triton X-100 (70:30:0.01) |
| Methyl Benzoate | Methyl Benzoate | 5 | Ethanol/water/Triton X-100 (70:30:0.01) |
| Placebo | / | / | Ethanol/water/Triton X-100 (70:30:0.01) |

For the purpose of the study, leaf disks were dipped for a total time of 30 seconds into the prepared solutions and left dry for 10 minutes at room temperature. Subsequently, the leaf disks were deposited at the bottom of glass tubes and a minimum of 20 adult whiteflies were introduced into the tubes. The repelling effect of anatabine, DEET and methyl benzoate was measured at different time points: after 6 hours, 24 hours, and 48 hours. The repelling effect of anatabine, DEET and methyl benzoate is shown in Table 6.

Table 6: Repelling effect of anatabine, DEET and methyl benzoate.

| | | Evaluation time | | | | | | | |
|---|---|---|---|---|---|---|---|---|---|
| | | 0 hour | | 6 hour | | 24 hour | | 48 hour | |
| **Active ingredient** | **Concentration (percentage)** | **Mean Repellence** | **Standard error** | **Mean Repellence** | **Standard error** | **Mean Repellence** | **Standard error** | **Mean Repellence** | **Standard error** |
| **Anatabine** | 5 | 100 | 0.0 | 100 | 0.0 | 100 | 0.0 | 100 | 0.0 |
| **DEET** | 5 | 100 | 0.0 | 100 | 0.0 | 94.9 | 0.0 | 93.4 | 2.8 |
| **Methyl Benzoate** | 5 | 100 | 0.0 | 47.2 | 38.5 | 76.8 | 16.4 | 76.5 | 5.9 |

The repelling effect of anatabine remained 100 percent throughout the evaluation period of 48 hours. In contrast, the repelling effect of methyl benzoate had dropped by almost 25 percent by the end of the 48 hours evaluation period (Figure 3) and the repelling effect of DEET have dropped to 93 percent.

In addition, the presence and amount of eggs on the leaves after a period of 48 hours was evaluated visually and the results are shown in Table 7.

Table 7: Presence of eggs on the leaves after being treated with anatabine, DEET, methyl benzoate and placebo.

| | | **Evaluation time** |
|---|---|---|
| | | **48 hour** |
| **Active ingredient** | **Concentration (percentage)** | **Presence of eggs** |
| **Anatabine** | 5 | - |
| **DEET** | 5 | - |
| **Methyl Benzoate** | 5 | - |
| **Placebo** | / | ++ |

No eggs were observed on the leaves treated with the repellents, regardless of the repellent used, but they were clearly visible on the untreated leaves.

The study also assessed the whitefly mortality rate over the duration of the evaluation period. The results are provided in Table 8.

Table 8: Whitefly mortality study comparing leaves treated with anatabine, DEET and methyl benzoate.

| | | Evaluation time | | | | | | | |
|---|---|---|---|---|---|---|---|---|---|
| | | **0 hour** | | **6 hour** | | **24 hour** | | **48 hour** | |
| **Active ingredient** | **Concentration (percentage)** | **Mean Mortality** | **Standard error** | **Mean Mortality** | **Standard error** | **Mean Mortality** | **Standard error** | **Mean Mortality** | **Standard error** |
| **Anatabine** | 5 | 0.0 | 0.0 | 7.6 | 9.4 | 41.3 | 14.2 | 84.6 | 15.9 |
| **DEET** | 5 | 0.0 | 0.0 | 1.4 | 2.4 | 50.0 | 8.3 | 80.3 | 19.4 |
| **Methyl Benzoate** | 5 | 0.0 | 0.0 | 1.4 | 2.5 | 47.6 | 37.2 | 77.8 | 6.8 |
| **Placebo** | - | 0.0 | 0.0 | 0.0 | 0.0 | 5.9 | 2.4 | 7.1 | 2.5 |
| **No access to the leaves** | - | 4.2 | 4.2 | 5.7 | 4.9 | 11.5 | 4.5 | 59.6 | 8.1 |

The whitefly mortality rate remained below 10 percent over the duration of the evaluation period when the leaves were treated with the placebo. In contrast, when the whitefly was prevented from feeding, because the leaves were treated with repellents, the whitely began to die within one day. At the end of the 48-hour evaluation period the whitefly mortality rate, with respect to the treated leaves, had reached around 80 percent as shown in Figure 4.

In order to better understand the mortality rate, a whitefly population was also observed without access to leaves over the 48-hour evaluation period. Without access to a food source whitefly began to die after only 24 hours, reaching a mortality rate of 60 percent after 48 hours.

In addition, it was observed that DEET and methyl benzoate caused severe damage to the leaves over the 48-hour evaluation period. In contrast, anatabine did not cause any damage over the evaluation period as shown in Table 9.

Table 9: Damage to leaves caused by treatment with anatabine, DEET and methyl benzoate.

| | | **Evaluation time** |
|---|---|---|
| | | **48 hour** |
| **Active ingredient** | **Concentration (percentage)** | **Leaves damage** |
| **Anatabine** | 5 | - |
| **DEET** | 5 | +++ |
| **Methyl Benzoate** | 5 | ++ |
| **Placebo** | / | - |

Example 4: Comparative study of the repelling effect of anatabine and DEET.

The repelling effect of anatabine on adult whitefly was evaluated in a further comparative study which introduced additional whitefly and freshly treated leaves at set evaluation time points. For the purpose of the study, a tube test assay was performed using solutions of anatabine and DEET at a concentration of 5 percent together with a placebo solution, as shown in Table 10. The placebo control defines the baseline, against which the repelling effect is then calculated.

Table 10: Solutions of anatabine and DEET.

| **Solutions** | **Active ingredient** | **Concentration (percentage)** | **Solvent** |
|---|---|---|---|
| Anatabine | Anatabine | 5 | Ethanol/water/Triton X-100 (70:30:0.01) |
| DEET | DEET | 5 | Ethanol/water/Triton X-100 (70:30:0.01) |
| Placebo | / | / | Ethanol/water/Triton X-100 (70:30:0.01) |

Whitefly were introduced into the tube at infestation time points: 48, 72 and 120 hours and the repelling effect was measured after 3 hours at evaluation time points: 51, 75 and 123 hours. The results are shown in Table 11.

Table 11: Repelling effect of anatabine and DEET

| | | **Evaluation time** | | | | | |
|---|---|---|---|---|---|---|---|
| | | **Infestation time: 48 hour** | | **Infestation time: 72 hour** | | **Infestation time: 120 hour** | |
| | | **Evaluation time: 51 hour** | | **Evaluation time: 75 hour** | | **Evaluation time: 123 hour** | |
| **Active ingredient** | **Concentration (percentage)** | **Mean Repellence** | **Standard error** | **Mean Repellence** | **Standard error** | **Mean Repellence** | **Standard error** |
| **Anatabine** | 5 | 100 | 0.0 | 85.3 | 18.4 | 82.2 | 15.4 |
| **DEET** | 5 | 54.1 | 12.4 | 55.9 | 8.8 | 48.9 | 10.2 |

Anatabine was shown to have 100 percent efficacy after 48 hours of treatment, followed by a repelling effect of more than 80 percent for the remaining 5 days (up to 123 hours) of the evaluation period. In contrast, the efficacy of DEET dropped by almost 50 percent after the first 48 hours and remained below 50 percent for the remaining 5 days (up to 123

hours) of the evaluation period (Figure 5).

The presence of eggs was visually monitored 24 hours after each infestation time point. The results are provided in Table 12.

Table 12: Presence of eggs on the leaves after the leaves have been treated with anatabine, DEET and placebo.

| | | **Evaluation time** | | |
|---|---|---|---|---|
| | | **Infestation time: 48 hour** | **Infestation time: 72 hour** | **Infestation time: 120 hour** |
| | | **Evaluation time: 72 hour** | **Evaluation time: 96 hour** | **Evaluation time: 144 hour** |
| **Active ingredient** | **Concentration (percentage)** | **Presence of eggs** | | |
| **Anatabine** | 5 | - | + | + |
| **DEET** | 5 | + | + | ++ |
| **Placebo** | / | ++ | +++ | +++ |

The number of eggs observed on the leaves treated with anatabine remained low for the evaluation period of up to 6 days (144 hours). In contrast, eggs were observed on DEET treated leaves after just 3 days (72 hours) and the number of eggs were close to that of the placebo treated leaves at the end of the 6-day (144 hours) evaluation period.

The invention is defined in the claims however, below there is provided a non-exhaustive list of non-limiting aspects. Any one or more of the features of these aspects may be combined with any one or more features of another aspect described herein.

Aspect 1: Use of a formulation for repelling or reducing infestation of hemipteran insects, the formulation comprising a compound of Formula I,

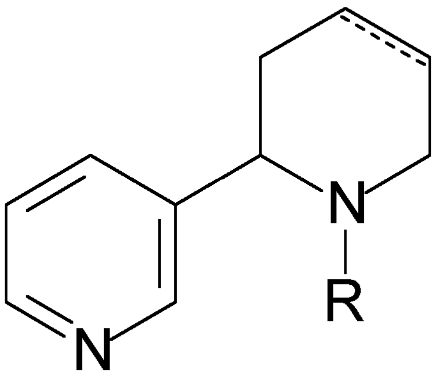

Formula I

Wherein

R represents hydrogen or $C_1$-$C_5$ alkyl, and
------ represents a single or double bond, and
wherein the hemipteran insects are sap-feeding insects.

Aspect 2: The use according to Aspect 1, wherein the hemipteran insects are sap-feeding insects that feed on plants.

Aspect 3: The use according to Aspect 1 or Aspect 2, wherein the hemipteran insects are sap-feeding insects that extract sap from a plant.

Aspect 4: The use according to Aspect 1 to Aspect 3, wherein the hemipteran insects are whitefly.

Aspect 5: The use according to Aspect 1 to Aspect 4, for repelling or reducing infestation of hemipteran insects from agricultural crops or plants.

Aspect 6: The use according to Aspect 1 to Aspect 5, for repelling or reducing infestation of whitefly from agricultural crops or plants.

Aspect 7: The use according to Aspect 5 or Aspect 6, wherein the agricultural crops or plants are vulnerable to

whitefly infestation.

Aspect 8: The use according to Aspect 5 to Aspect 7, wherein the agricultural crops or plants are selected from tobacco plants, cereals, leguminous plants, oil plants, Cucurbitaceae plants, fibre plants, vegetables, fruits, flowers and ornamentals.

Aspect 9: The use according to Aspect 5 to Aspect 8, wherein the agricultural crops or plants are tobacco plants.

Aspect 10: The use according to Aspect 5 to Aspect 9, wherein the agricultural crops or plants are cultivated in a greenhouse.

Aspect 11: The use according to Aspect 1 to Aspect 10, wherein R in the compound of Formula I represents hydrogen.

Aspect 12: The use according to Aspect 1 to Aspect 11, wherein ------ in the compound of Formula I represents a double bond.

Aspect 13: The use according to Aspect 1 to Aspect 12, wherein the compound of Formula I is selected from anatabine, S-(-) anatabine, R-(+) anatabine, a mixture of S-(-) anatabine and R-(+) anatabine, or a racemate of S-(-) anatabine and R-(+) anatabine.

Aspect 14: The use according to Aspect 1 to Aspect 13, wherein the hemipteran insects are sap-feeding insects that feed on tobacco plants, and wherein the compound of Formula I is anatabine.

Aspect 15: The use according to Aspect 1 to Aspect 14, wherein the hemipteran insects are whitefly, and wherein the compound of Formula I is anatabine.

Aspect 16: The use according to Aspect 1 to Aspect 15, wherein the compound of Formula I is extracted from tobacco or chemically synthesised.

Aspect 17: The use according to Aspect 1 to Aspect 16, wherein the formulation comprises a concentrate of the compound of Formula I.

Aspect 18: The use according to Aspect 1 to Aspect 17, wherein the formulation comprises the compound of Formula I in an amount of at least 99 percent, at least 95 percent, at least 90 percent, at least 85 percent, at least 80 percent, at least 75 percent, at least 70 percent, at least 65 percent, at least 60 percent, at least 55 percent, at least 50 percent, at least 45 percent, at least 40 percent, at least 35 percent, at least 30 percent, at least 25 percent, at least 20 percent, at least 15 percent, at least 10 percent, at least 5 percent, at least 2.5 percent, or at least 1 percent by weight of the formulation.

Aspect 19: The use according to Aspect 1 to Aspect 18, wherein the formulation is a water-soluble concentrate, emulsifiable concentrate, micro-emulsion, oil-based suspension, flowable suspension, water-dispersible granule, water-soluble granule, wettable powder, water soluble powder, encapsulated granule, macrogranule, aqueous suspo-emulsion, microencapsulated suspension or microgranule.

Aspect 20: The use according to Aspect 1 to Aspect 19, wherein the formulation is diluted in water.

Aspect 21: The use according to Aspect 20, wherein the dilution ratio of the formulation to water is 1:1, 1:2, 1:3, 1:4, 1:5, 1:6, 1:7, 1:8, 1:9, 1:10, 1:15, 1:20, 1:25, 1:30, 1:35, 1:40, 1:45, 1:50, 1:55, 1:60, 1:65, 1:70, 1:75, 1:80, 1:85, 1:90, 1:95, 1:100, 1:150, 1:200, 1:250, 1:300, 1:350, 1:400, 1:450, 1:500, 1:600, 1:700, 1:800, 1:900, or 1:1000.

Aspect 22: The use according to Aspects 20 or 21, wherein the amount of the compound of Formula I is from 0.1 percent to 20 percent, from 0.2 percent to 19 percent, from 0.3 percent to 18 percent, from 0.4 percent to 17 percent, from 0.5 percent to 16 percent, from 0.6 percent to 15 percent, from 0.7 percent to 14 percent, from 0.8 percent to 13 percent, from 0.9 percent to 12 percent, from 1 percent to 11 percent, from 1.1 percent to 10 percent, from 1.2 percent to 9 percent, from 1.3 percent to 8 percent, from 1.4 percent to 7 percent, from 1.5 percent to 6 percent, from 1.6 percent to 5 percent, from 1.7 percent to 4 percent, or from 1.8 percent to 3 percent by weight of the diluted formulation.

Aspect 23: The use according to Aspect 1 to Aspect 22, wherein the formulation is applied to agricultural crops or plants by coating, spraying, soaking, or irrigation.

Aspect 24: The use according to Aspect 23, wherein the formulation is applied to the agricultural crops or plants by spraying.

Aspect 25: The use according to Aspect 1 to Aspect 24, wherein the formulation is applied to agricultural crops or plants 1, 2, 3, 4, 5 or 6 times within a 24-hour period.

Aspect 26: The use according to Aspect 1 to Aspect 25, wherein the formulation is applied to agricultural crops or plants with a frequency of every day, every second day, every fifth day, every week, every fortnight, or every month.

Aspect 27: The use according to Aspect 25 and 26, wherein the formulation is applied to the agricultural crops or plants 1 time every five days.

Aspect 28: The use according to Aspect 1 to Aspect 27, wherein the formulation is applied to agricultural crops or plants for at least 65 days, at least 60 days, at least 55 days, at least 50 days, at least 45 days, or at least 40 days, or at least 35 days, or at least 30 days, or at least 25 days, or at least 20 days.

Aspect 29: The use according to Aspect 28, wherein the formulation is applied to the agricultural crops or plants for at least 40 days.

Aspect 30: Use of a compound of Formula I for repelling or reducing infestation of hemipteran insects,

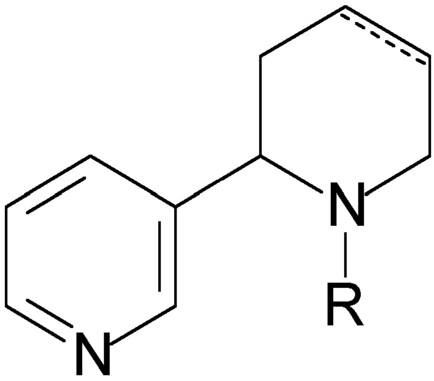

Formula I

Wherein

R represents hydrogen or $C_1$-$C_5$ alkyl, and
------ represents a single or double bond, and
wherein the hemipteran insects are sap-feeding insects.

Aspect 31: The use according to Aspect 30, wherein the compound of Formula I is anatabine, S-(-) anatabine, R-(+) anatabine, a mixture of S-(-) anatabine and R-(+) anatabine, or a racemate of S-(-) anatabine and R-(+) anatabine.
Aspect 32: The use according to Aspects 30 or 31, wherein the hemipteran insects are whitefly.
Aspect 33: A method of repelling hemipteran insects, the method comprising:

a. preparing a concentrated formulation comprising a compound of Formula I, preferably anatabine;

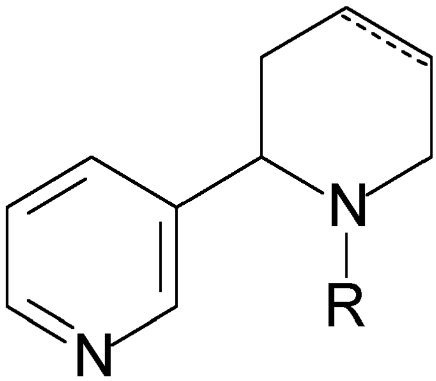

Formula I

wherein

R represents hydrogen or $C_1$-$C_5$ alkyl, and
------ represents a single or double bond

b. diluting the formulation in water to a predetermined dilution ratio or concentration;

c. applying the diluted formulation to agricultural crops or plants, preferably by spraying.

Aspect 34: The method according to Aspect 33, wherein the hemipteran insects are whitefly.
For the purpose of the present description and of the appended claims, except where otherwise indicated, all numbers expressing amounts, quantities, percentages, ratios and so forth, are to be understood as being modified in all instances by the term "about". Also, all ranges include the maximum and minimum points disclosed and include any intermediate ranges therein, which may or may not be specifically enumerated herein. In this context, therefore, a number A is understood as A $\pm$ 5 percent of A. Within this context, a number A may be considered to include numerical values that are within general standard error for the measurement of the property that the number A modifies. The number A, in some instances as used in the appended claims, may deviate by the percentages enumerated above provided that the amount

by which A deviates does not materially affect the basic and novel characteristic(s) of the claimed invention. Also, all ranges include the maximum and minimum points disclosed and include any intermediate ranges therein, which may or may not be specifically enumerated herein.

## Claims

1. Use of a formulation for repelling or reducing infestation of hemipteran insects, the formulation comprising a compound of Formula I,

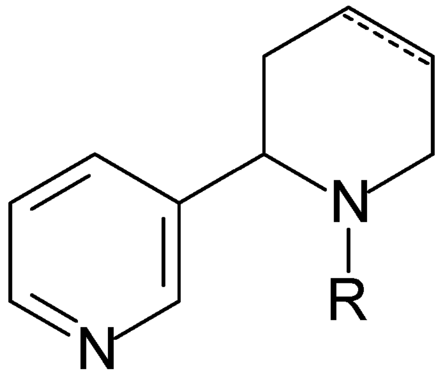

Formula I

Wherein

R represents hydrogen or $C_1$-$C_5$ alkyl, and
------ represents a single or double bond, and
wherein the hemipteran insects are sap-feeding insects.

2. The use according to claim 1, wherein the hemipteran insects are whitefly.

3. The use according to any preceding claim, for repelling or reducing infestation of hemipteran insects from agricultural crops or plants.

4. The use according to claim 3, wherein the agricultural crops or plants are vulnerable to whitefly infestation.

5. The use according to claims 3 or 4, wherein the agricultural crops or plants are selected from tobacco plants, cereals, leguminous plants, oil plants, Cucurbitaceae plants, fibre plants, vegetables, fruits, flowers and ornamentals.

6. The use according to claims 3 to 5, wherein the agricultural crops or plants are tobacco plants.

7. The use according to claims 3 to 5, wherein the agricultural crops or plants are cultivated in a greenhouse.

8. The use according to any preceding claim, wherein the compound of Formula I is selected from anatabine, S-(-) anatabine, R-(+) anatabine, a mixture of S-(-) anatabine and R-(+) anatabine, or a racemate of S-(-) anatabine and R-(+) anatabine.

9. The use according to any preceding claim, wherein the formulation comprises a concentrate of the compound of Formula I.

10. The use according to any preceding claim, wherein the formulation comprises the compound of Formula I in an amount of at least 99 percent, at least 95 percent, at least 90 percent, at least 85 percent, at least 80 percent, at least 75 percent, at least 70 percent, at least 65 percent, at least 60 percent, at least 55 percent, at least 50 percent, at least 45 percent, at least 40 percent, at least 35 percent, at least 30 percent, at least 25 percent, at least 20 percent, at least 15 percent, at least 10 percent, at least 5 percent, at least 2.5 percent, or at least 1 percent by weight of the formulation.

11. The use according to any preceding claim, wherein the formulation is diluted in water.

**12.** The use according to claim 11, wherein the amount of the compound of Formula I is from 0.1 percent to 20 percent, from 0.2 percent to 19 percent, from 0.3 percent to 18 percent, from 0.4 percent to 17 percent, from 0.5 percent to 16 percent, from 0.6 percent to 15 percent, from 0.7 percent to 14 percent, from 0.8 percent to 13 percent, from 0.9 percent to 12 percent, from 1 percent to 11 percent, from 1.1 percent to 10 percent, from 1.2 percent to 9 percent, from 1.3 percent to 8 percent, from 1.4 percent to 7 percent, from 1.5 percent to 6 percent, from 1.6 percent to 5 percent, from 1.7 percent to 4 percent, or from 1.8 percent to 3 percent by weight of the diluted formulation.

**13.** The use according to any preceding claim, wherein the formulation is applied to agricultural crops or plants by coating, spraying, soaking, or irrigation.

**14.** A method of repelling hemipteran insects, the method comprising:

a. preparing a concentrated formulation comprising a compound of Formula I, preferably anatabine;

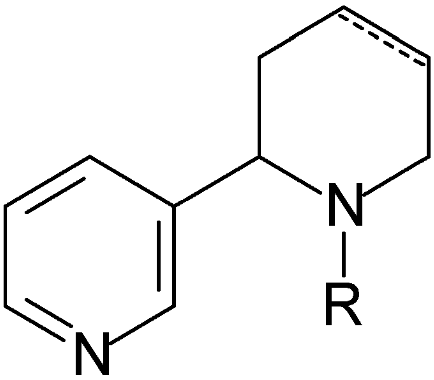

Formula I

wherein

R represents hydrogen or $C_1$-$C_5$ alkyl, and
------ represents a single or double bond

b. diluting the formulation in water to a predetermined dilution ratio or concentration;
c. applying the diluted formulation to agricultural crops or plants, preferably by spraying.

**Patentansprüche**

**1.** Verwendung einer Formulierung zum Abwehren oder Reduzieren des Befalls durch Hemiptera-Insekten, wobei die Formulierung eine Verbindung der Formel I umfasst,

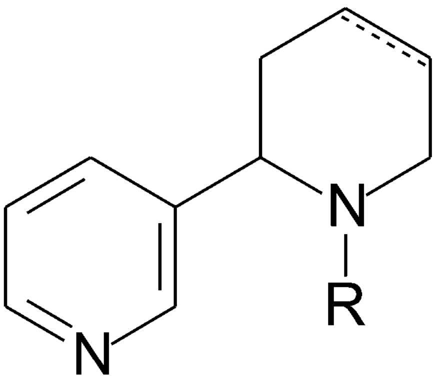

Formel I

wobei

R Wasserstoff oder $C_1$-$C_5$-Alkyl repräsentiert, und
------ eine Einfach- oder Doppelbindung repräsentiert, und
wobei die Hemiptera-Insekten pflanzensaftsaugende Insekten sind.

2. Verwendung nach Anspruch 1, wobei die Hemiptera-Insekten Mottenschildläuse sind.

3. Verwendung nach einem beliebigen vorhergehenden Anspruch zum Abwehren oder Reduzieren des Befalls landwirtschaftlicher Kulturen oder Pflanzen durch Hemiptera-Insekten.

4. Verwendung nach Anspruch 3, wobei die landwirtschaftlichen Kulturen oder Pflanzen anfällig für Mottenschildlausbefall sind.

5. Verwendung nach Anspruch 3 oder 4, wobei die landwirtschaftlichen Kulturen oder Pflanzen ausgewählt sind aus Tabakpflanzen, Getreide, Hülsenfrüchten, Ölpflanzen, Kürbisgewächsen, Faserpflanzen, Gemüse, Obst, Blumen und Zierpflanzen.

6. Verwendung nach Anspruch 3 bis 5, wobei die landwirtschaftlichen Kulturen oder Pflanzen Tabakpflanzen sind.

7. Verwendung nach Anspruch 3 bis 5, wobei die landwirtschaftlichen Kulturen oder Pflanzen in einem Gewächshaus angebaut werden.

8. Verwendung nach einem beliebigen vorhergehenden Anspruch, wobei die Verbindung der Formel I ausgewählt ist aus Anatabin, S-(-)-Anatabin, R-(+)-Anatabin, einer Mischung aus S-(-)-Anatabin und R-(+)-Anatabin oder einem Racemat aus S-(-)-Anatabin und R-(+)-Anatabin.

9. Verwendung nach einem beliebigen vorhergehenden Anspruch, wobei die Formulierung ein Konzentrat aus der Verbindung der Formel I umfasst.

10. Verwendung nach einem beliebigen vorhergehenden Anspruch, wobei die Formulierung die Verbindung der Formel I in einer Menge von wenigstens 99 Prozent, wenigstens 95 Prozent, wenigstens 90 Prozent, wenigstens 85 Prozent, wenigstens 80 Prozent, wenigstens 75 Prozent, wenigstens 70 Prozent, wenigstens 65 Prozent, wenigstens 60 Prozent, wenigstens 55 Prozent, wenigstens 50 Prozent, wenigstens 45 Prozent, wenigstens 40 Prozent, wenigstens 35 Prozent, wenigstens 30 Prozent, wenigstens 25 Prozent, wenigstens 20 Prozent, wenigstens 15 Prozent, wenigstens 10 Prozent, wenigstens 5 Prozent, wenigstens 2,5 Prozent oder wenigstens 1 Prozent, bezogen auf das Gewicht der Formulierung, umfasst.

11. Verwendung nach einem beliebigen vorhergehenden Anspruch, wobei die Formulierung in Wasser verdünnt wird.

12. Verwendung nach Anspruch 11, wobei die Menge der Verbindung der Formel I 0,1 Prozent bis 20 Prozent, 0,2 Prozent bis 19 Prozent, 0,3 Prozent bis 18 Prozent, 0,4 Prozent bis 17 Prozent, 0,5 Prozent bis 16 Prozent, 0,6 Prozent bis 15 Prozent, 0,7 Prozent bis 14 Prozent, 0,8 Prozent bis 13 Prozent, 0,9 Prozent bis 12 Prozent, 1 Prozent bis 11 Prozent, 1,1 Prozent bis 10 Prozent, 1,2 Prozent bis 9 Prozent, 1,3 Prozent bis 8 Prozent, 1,4 Prozent bis 7 Prozent, 1,5 Prozent bis 6 Prozent, 1,6 Prozent bis 5 Prozent, 1,7 Prozent bis 4 Prozent oder 1,8 Prozent bis 3 Prozent, bezogen auf das Gewicht der verdünnten Formulierung, beträgt.

13. Verwendung nach einem beliebigen vorhergehenden Anspruch, wobei die Formulierung durch Bestreichen, Sprühen, Tränken oder durch Berieselung auf landwirtschaftliche Kulturen oder Pflanzen aufgebracht wird.

14. Verfahren zum Abwehren von Hemiptera-Insekten, wobei das Verfahren Folgendes umfasst:

a. Herstellen einer konzentrierten Formulierung, die eine Verbindung der Formel I, bevorzugt Anatabin, umfasst;

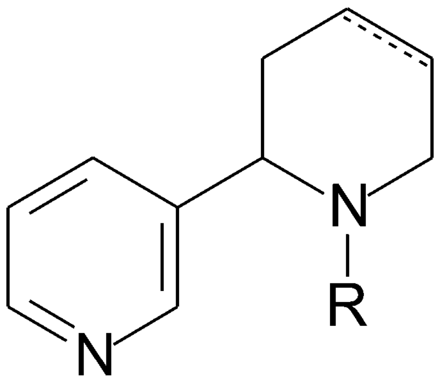

Formel I

wobei

R Wasserstoff oder $C_1$-$C_5$-Alkyl repräsentiert, und
------ eine Einfach- oder Doppelbindung repräsentiert

b. Verdünnen der Formulierung in Wasser auf ein vorbestimmtes Verdünnungsverhältnis oder eine vorbestimmte Konzentration;
c. Aufbringen der verdünnten Formulierung auf landwirtschaftliche Kulturen oder Pflanzen, bevorzugt durch Sprühen.

**Revendications**

1. Utilisation d'une formulation pour repousser ou réduire une infestation d'insectes hémiptères, la formulation comprenant un composé de formule I,

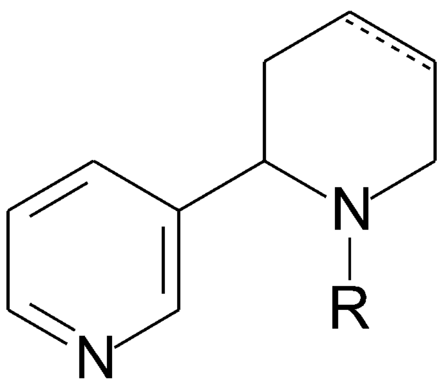

Formule I

dans laquelle

R représente un hydrogène ou un alkyle en $C_1$-$C_5$, et
------ représente une liaison simple ou double, et
dans laquelle les insectes hémiptères sont des insectes se nourrissant de sève.

2. Utilisation selon la revendication 1, dans laquelle les insectes hémiptères sont des mouches blanches.

3. Utilisation selon une quelconque revendication précédente, pour repousser ou réduire une infestation d'insectes hémiptères des cultures ou des plantes agricoles.

4. Utilisation selon la revendication 3, dans laquelle les cultures ou les plantes agricoles sont vulnérables à une infestation par des mouches blanches.

5. Utilisation selon les revendications 3 ou 4, dans laquelle les cultures ou plantes agricoles sont choisies parmi les plantes de tabac, les céréales, les plantes légumineuses, les plantes oléagineuses, les plantes de Cucurbitaceae, les plantes à fibres, les légumes, les fruits, les fleurs et les plantes d'ornement.

6. Utilisation selon les revendications 3 à 5, dans laquelle les cultures ou plantes agricoles sont des plantes de tabac.

7. Utilisation selon les revendications 3 à 5, dans laquelle les cultures ou plantes agricoles sont cultivées dans une serre.

8. Utilisation selon une quelconque revendication précédente, dans laquelle le composé de formule I est choisi parmi l'anatabine, la S-(-) anatabine, la R-(+) anatabine, un mélange de S-(-) anatabine et de R-(+) anatabine, ou un racémate de S-(-) anatabine et de R-(+) anatabine.

9. Utilisation selon une quelconque revendication précédente, dans laquelle la formulation comprend un concentré du composé de formule I.

10. Utilisation selon une quelconque revendication précédente, dans laquelle la formulation comprend le composé de formule I en une quantité d'au moins 99 pour cent, d'au moins 95 pour cent, d'au moins 90 pour cent, d'au moins 85 pour cent, d'au moins 80 pour cent, d'au moins 75 pour cent, d'au moins 70 pour cent, d'au moins 65 pour cent, d'au moins 60 pour cent, d'au moins 55 pour cent, d'au moins 50 pour cent, d'au moins 45 pour cent, d'au moins 40 pour cent, d'au moins 35 pour cent, d'au moins 30 pour cent, d'au moins 25 pour cent, d'au moins 20 pour cent, d'au moins 15 pour cent, d'au moins 10 pour cent, d'au moins 5 pour cent, d'au moins 2,5 pour cent ou d'au moins 1 pour cent en poids de la formulation.

11. Utilisation selon une quelconque revendication précédente, dans laquelle la formulation est diluée dans de l'eau.

12. Utilisation selon la revendication 11, dans laquelle la quantité du composé de formule I est de 0,1 pour cent à 20 pour cent, de 0,2 pour cent à 19 pour cent, de 0,3 pour cent à 18 pour cent, de 0,4 pour cent à 17 pour cent, de 0,5 pour cent à 16 pour cent, de 0,6 pour cent à 15 pour cent, de 0,7 pour cent à 14 pour cent, de 0,8 pour cent à 13 pour cent, de 0,9 pour cent à 12 pour cent, de 1 pour cent à 11 pour cent, de 1,1 pour cent à 10 pour cent, de 1,2 pour cent à 9 pour cent, de 1,3 pour cent à 8 pour cent, de 1,4 pour cent à 7 pour cent, de 1,5 pour cent à 6 pour cent, de 1,6 pour cent à 5 pour cent, de 1,7 pour cent à 4 pour cent ou de 1,8 pour cent à 3 pour cent en poids de la formulation diluée.

13. Utilisation selon une quelconque revendication précédente, dans laquelle la formulation est appliquée aux cultures ou aux plantes agricoles par enrobage, pulvérisation, trempage ou irrigation.

14. Procédé pour repousser les insectes hémiptères, le procédé comprenant :

a. la préparation d'une formulation concentrée comprenant un composé de formule I, de préférence l'anatabine ;

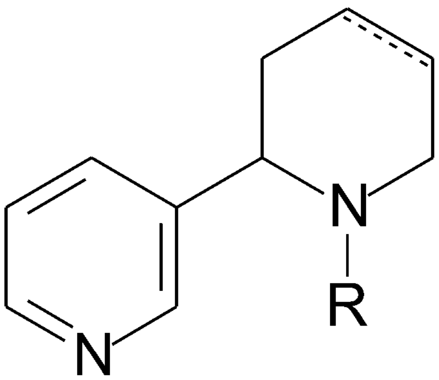

Formule I

dans lequel

R représente un hydrogène ou un alkyle en $C_1$-$C_5$, et
------ représente une liaison simple ou double

b. la dilution de la formulation dans de l'eau à un rapport de dilution ou à une concentration prédéterminés ;
c. l'application de la formulation diluée sur des cultures ou plantes agricoles, de préférence par pulvérisation.

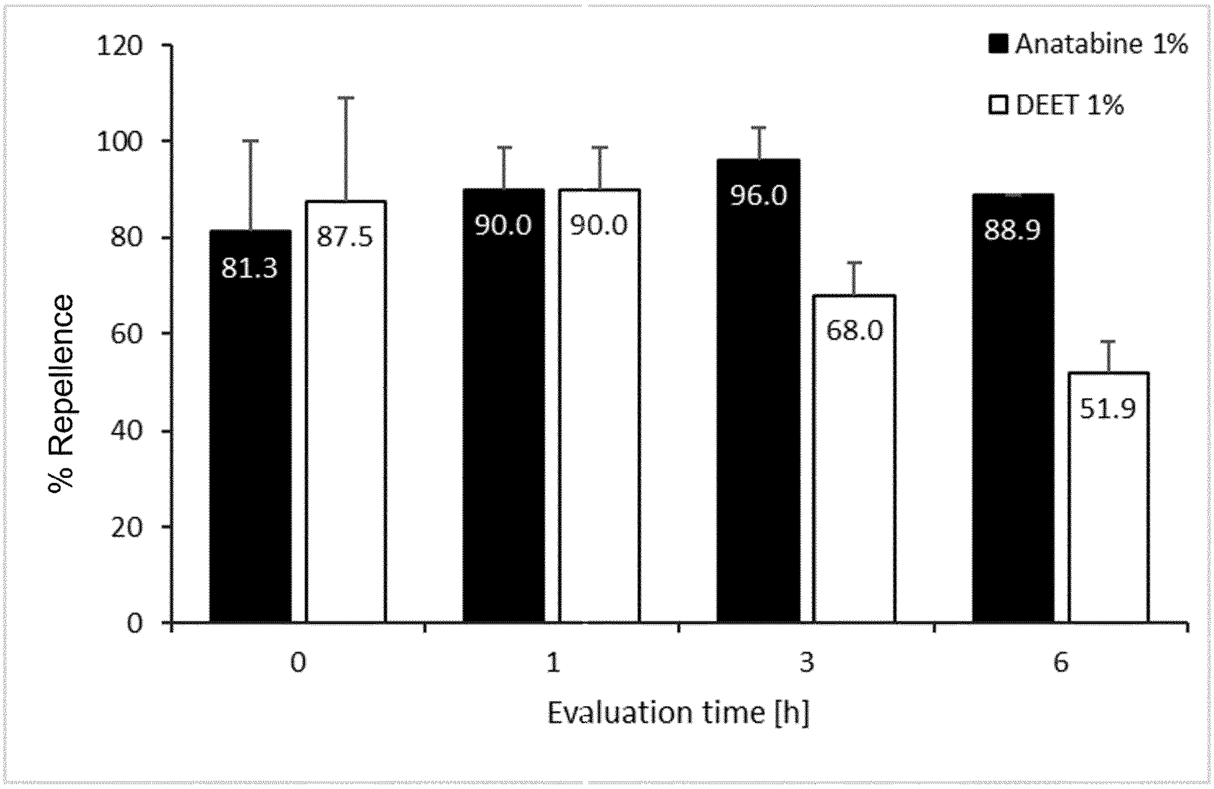
Anatabine 1%
DEET 1%
% Repellence
120
100
80
60
40
20
0
81.3
87.5
90.0
90.0
96.0
68.0
88.9
51.9
0
1
3
6
Evaluation time [h]

Figure 1

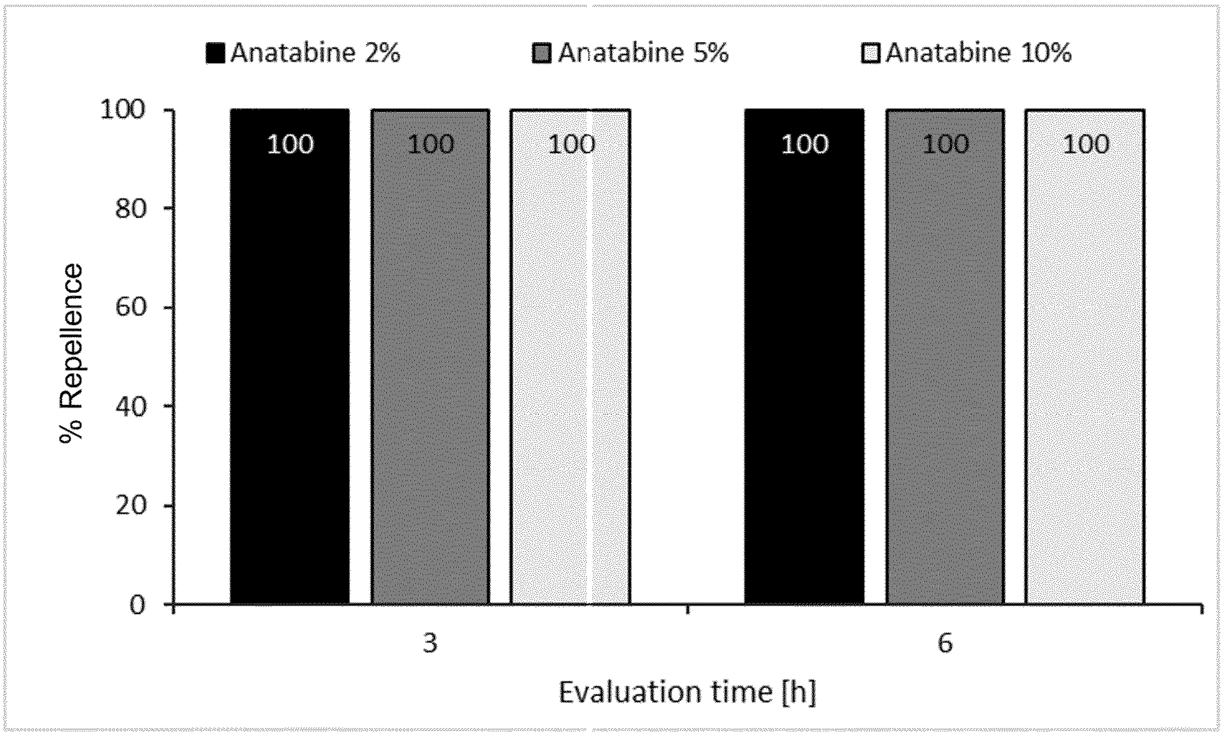
Anatabine 2%
Anatabine 5%
Anatabine 10%
100
80
60
40
20
0
% Repellence
100
100
100
100
100
100
3
6
Evaluation time [h]

Figure 2

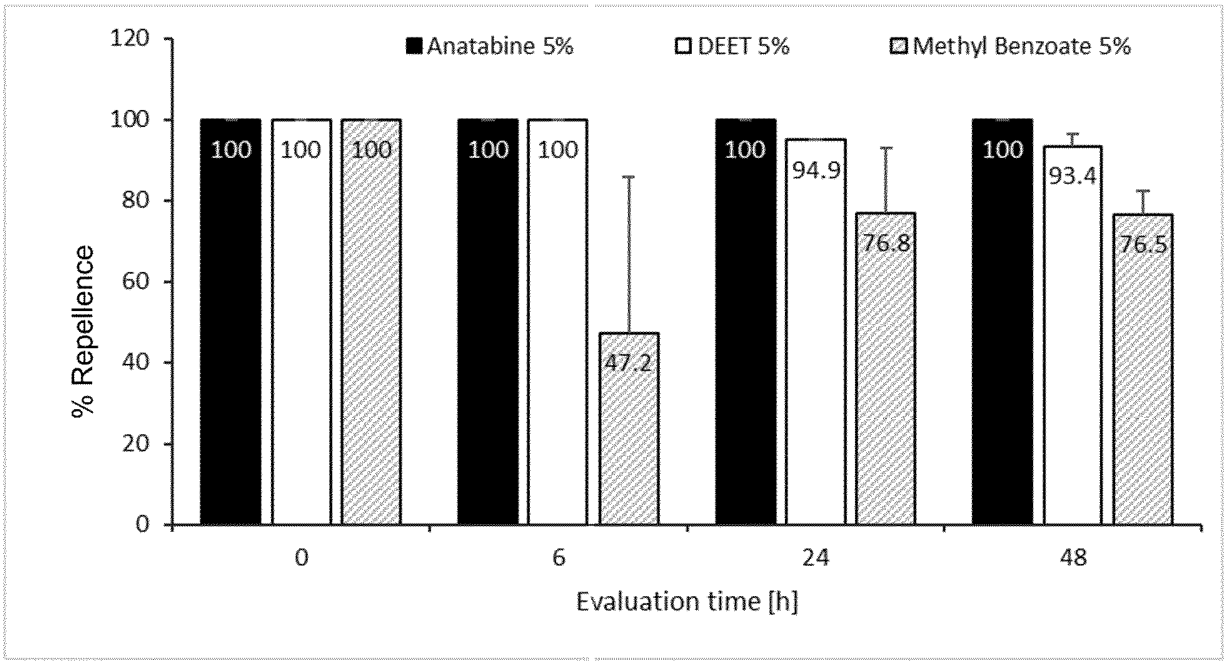
Anatabine 5%
DEET 5%
Methyl Benzoate 5%
% Repellence
120
100
80
60
40
20
0
100
100
100
100
100
100
94.9
76.8
100
93.4
76.5
47.2
0
6
24
48
Evaluation time [h]

Figure 3

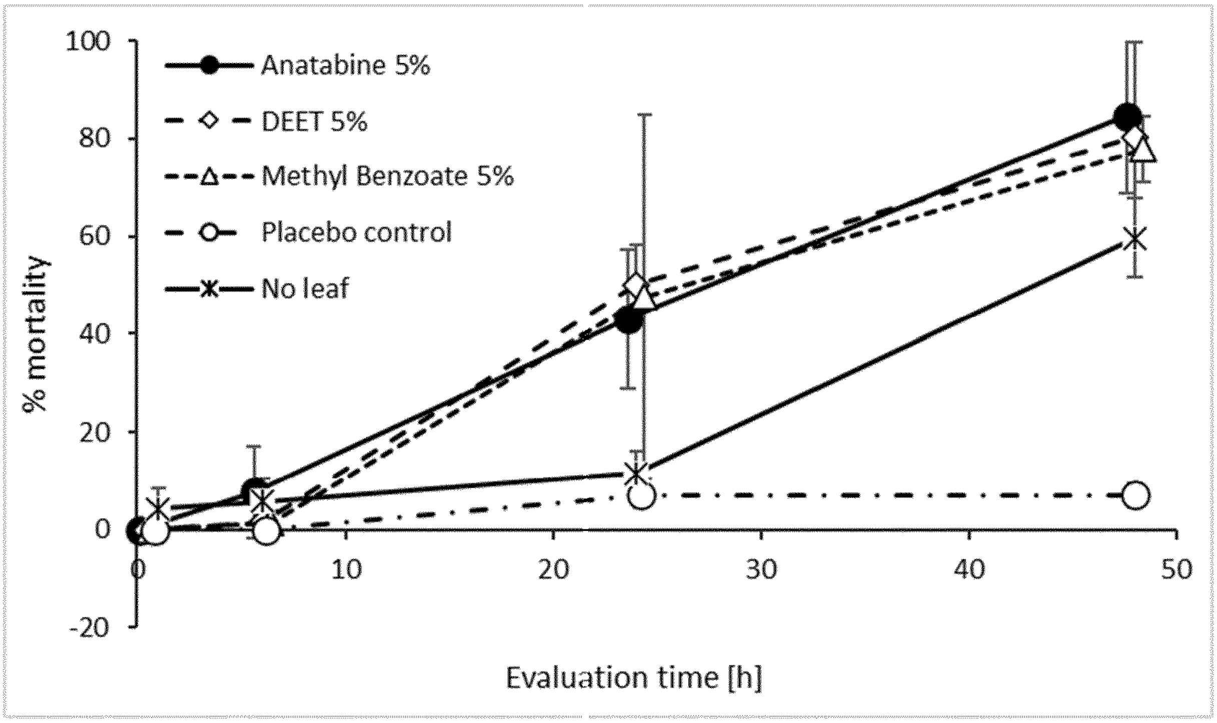

Anatabine 5%
DEET 5%
Methyl Benzoate 5%
Placebo control
No leaf
% mortality
Evaluation time [h]
100
80
60
40
20
0
-20
0
10
20
30
40
50


Figure 4

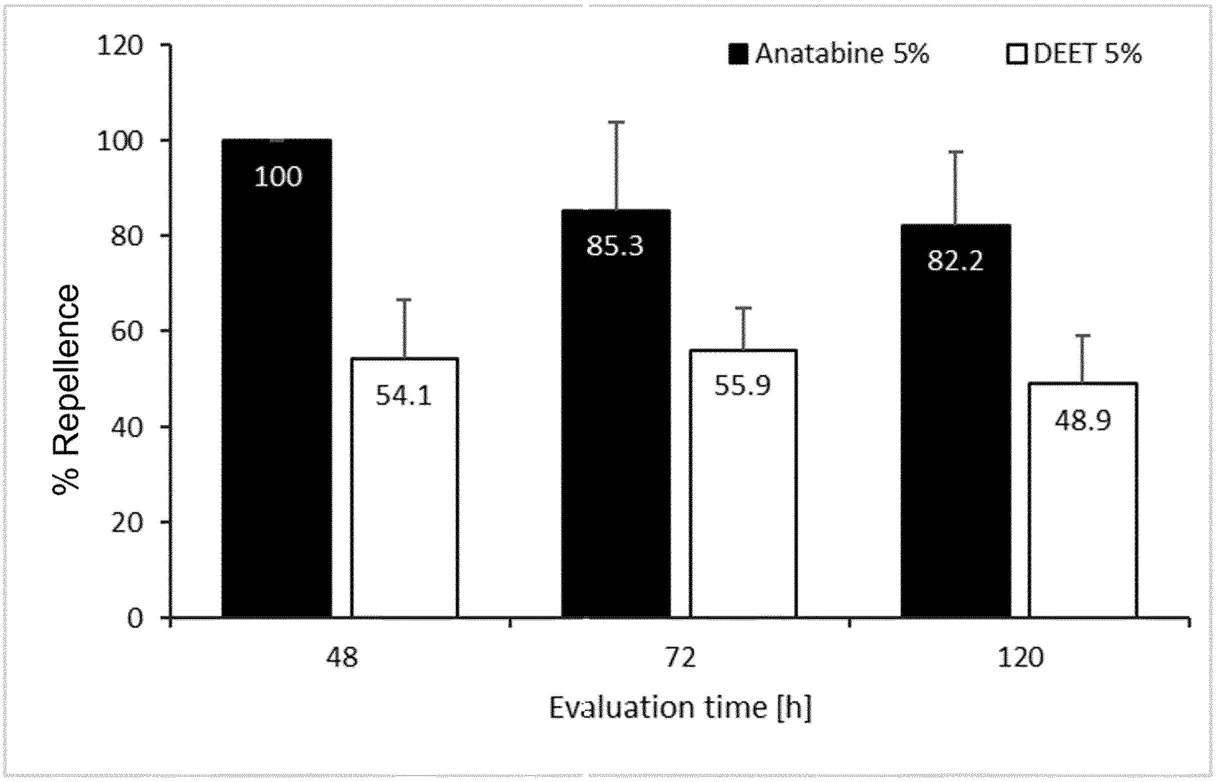
120
100
80
60
40
20
0
% Repellence
Anatabine 5%
DEET 5%
100
54.1
85.3
55.9
82.2
48.9
48
72
120
Evaluation time [h]

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020260392 A


### Non-patent literature cited in the description


- **CURNUTTE et al.** *Annals of the Entomological Society of America*, vol. 107 (5)
- **SANI et al.** *Insects*, 2020, vol. 11, 619
- **WAGEN** ; **CAI** ; **HUA**. Repellency, toxicity, and anti-oviposition of essential oil of Gardenia jasminoides and its four major chemical components against whiteflies and mites. *Scientific Reports*, 2018, vol. 8, 9375
- **MOSTAFIZ et al.** *PLoS ONE*, 2018, vol. 13